Europäisches Patentamt

European Patent Office

Office européen des brevets

(19)

(11) Veröffentlichungsnummer: **0 055 988**
**B1**

(12) # EUROPÄISCHE PATENTSCHRIFT

(45) Veröffentlichungstag der Patentschrift:
15.07.87

(51) Int. Cl.⁴: **H 02 P 5/16**, H 02 P 7/28

(21) Anmeldenummer: **82100074.2**

(22) Anmeldetag: **07.01.82**

(54) **Schaltung zur Drehzahlregelung fremderregter Gleichstrommotoren.**

(30) Priorität: **07.01.81 DE 3100172**
**07.01.81 DE 3100173**

(43) Veröffentlichungstag der Anmeldung:
**14.07.82 Patentblatt 82/28**

(45) Bekanntmachung des Hinweises auf die Patenterteilung:
**15.07.87 Patentblatt 87/29**

(84) Benannte Vertragsstaaten:
**CH FR GB LI NL**

(56) Entgegenhaltungen:
**DE - A - 2 814 768**
**DE - B - 1 952 879**
**US - A - 3 976 926**
**US - A - 4 177 412**

**CONTROL ENGINEERING, Band 26, Nr. 10, Oktober 1979, D. GEIGER, "Regulating servo speed without a tachometer", Seiten 73,74**

(73) Patentinhaber: **Doehler, Peter, Dipl.-Kfm.,
Kaulbachstrasse 59, D-8000 München 22 (DE)**

(72) Erfinder: **Haass, Adolf, Eichelhäherstrasse 54,
D-8000 München 60 (DE)**

(74) Vertreter: **Dorner, Jörg, Dr.-Ing. et al, Dorner & Hufnagel
Patentanwälte Ortnitstrasse 20,
D-8000 München 81 (DE)**

**Beschreibung**

Die Erfindung betrifft eine Schaltung zur Drehzahlregelung eines fremderregten Gleichstrommotors mit einer Vergleicherschaltung, der einerseits die Ankerspannung und andererseits eine Referenzspannung zuführbar ist und die an eine Auslöseschaltung angeschlossen ist, die eine mit der Vergleicherschaltung verbundene Kippschaltung enthält und zur Auslösung der Weitergabe von Gleichspannungsimpulsen einer Impulsquelle an den Motoranker jeweils abhängig von die Auslösebedingung erfüllenden Ausgangssignalen der Vergleicherschaltung dient.

Drehzahlregelschaltungen dieser Art sind aus der deutschen Offenlegungsschrift 28 14 768 bekannt, und haben den Vorzug, dass sie bei relativ geringem apparativem Aufwand eine präzise Regelung in einem sehr weiten Bereich von Motorbelastungen und auch bei niedriger Motordrehzahl ermöglichen.

Da aber die Kippschaltung bei der bekannten Drehzahlregelschaltung notwendig immer dann die Weitergabe eines Spannungsimpulses an den Motoranker auslöst, wenn das für die Ankerspannung repräsentative Eingangssignal zur Vergleicherschaltung unter die Referenzspannung absinkt, auch wenn dies kurzzeitig der Fall sein sollte, kann bei einer Unterbrechung des Kontaktes der Bürsten zu den Kollektorlamellen aufgrund von Erschütterungen oder durch Zwischenlagerung von Fremdkörpern eine Auslösebedingung vorgetäuscht werden, was zu einer die präzise Regelung störenden übermässigen Impulsbeaufschlagung des Motorankers führt.

Durch die Erfindung soll die Aufgabe gelöst werden, eine Drehzahlregelschaltung der eingangs beschriebenen Art so auszugestalten, dass ein kurzzeitiges Absinken des für die Ankerspannung repräsentativen Eingangssignals zum Vergleicher nicht zu einer vorzeitigen Impulsbeaufschlagung des Motorankers führt, die Störung der Regelung durch transiente Vorgänge also vermieden wird.

Diese Aufgabe wird erfindungsgemäss dadurch gelöst, dass die Kippschaltung ausserdem von Taktimpulsen vorbestimmter Dauer beaufschlagt und derart ausgebildet ist, dass die Weitergabe der Gleichspannungsimpulse an den Motoranker nur erfolgt, wenn die Dauer der die Auslösebedingung erfüllenden Ausgangssignale der Vergleicherschaltung mindestens gleich der Dauer der Taktimpulse ist.

Es kann festgestellt werden, dass die hier angegebene Schaltung sich durch vergleichsweise einfachen Aufbau auszeichnet und sich für die Miniaturisierung eignet, so dass auch die Unterbringung auf engstem Raume, etwa in Lokomotiven von Modelleisenbahnen, ohne weiteres möglich ist, ohne dass die Verwendung der Schaltung auf diesen Bereich beschränkt wäre.

Ein bevorzugtes Ausführungsbeispiel wird nachfolgend unter Bezugnahme auf die anliegende Zeichnung näher erläutert. Es stellen dar:

Fig. 1 ein Schaltbild einer Regelschaltung zur Drehzahlregelung fremderregter Gleichstrommotoren und

Fig. 2 eine Reihe von Zeitdiagrammen, welche den Spannungsverlauf oder Signalverlauf an bestimmten Schaltungspunkten der Schaltung nach Figur 1 zeigen.

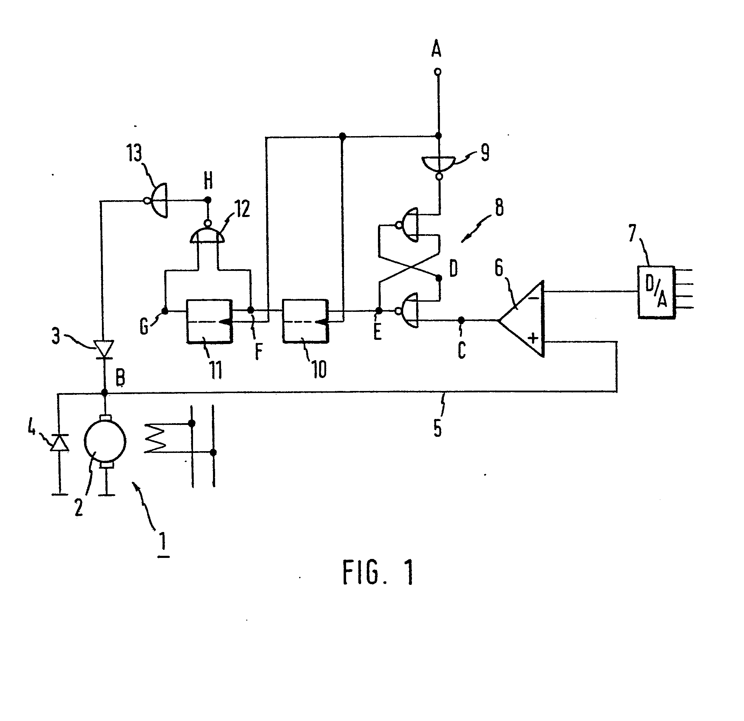

In Figur 1 ist schematisch ein fremderregter Gleichstrommotor 1 dargestellt, dessen Anker 2 über einen Gleichrichter 3 mit Gleichspannungsimpulsen beaufschlagt werden kann. Ein weiterer Gleichrichter 4 liegt zu den Bürsten des Ankers 2 parallel. Die Ankerspannung wird über eine Leitung 5 abgenommen und einem Vergleicher 6 zugeführt, in welchem ein Vergleich dieser Ankerspannung mit einem Sollwert erfolgt, der über einen Signalübertragungskanal in digitaler Form bezogen, in einem Digital-/Analogwandler 7 in einen Analogwert umgewandelt und dem jeweils anderen Eingang des Vergleichers 6 zugeführt wird.

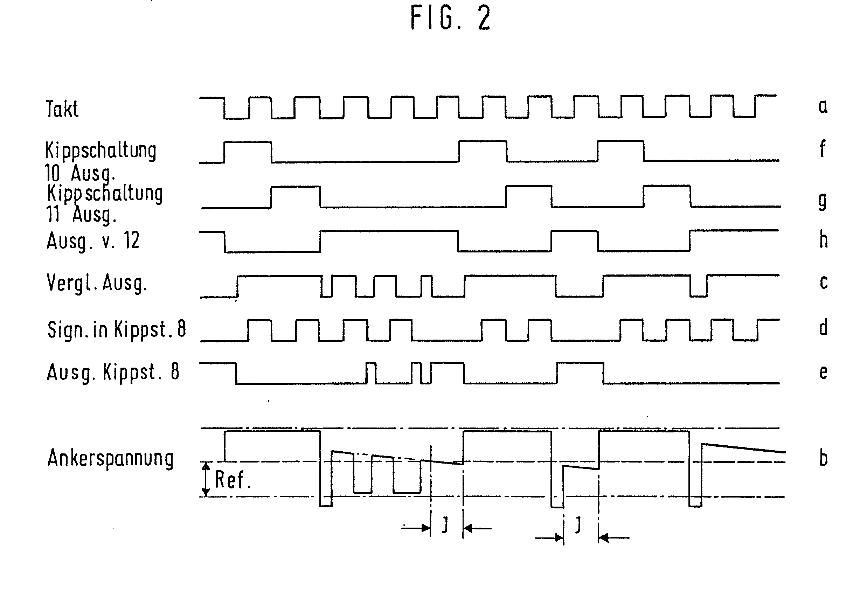

Der Ausgang des Vergleichers 6 speist eine aus zwei Gattern mit WEDER-Funktion gebildete Kippstufe 8, deren Schaltungsaufbau aus Figur 1 zu entnehmen ist und deren Wirkungsweise weiter unten im Zusammenhang mit Figur 2 näher erläutert wird.

Die Kippstufe 8 wird mit über einen Inverter 9 geführten Taktimpulsen konstanter Dauer von der Klemme A aus beaufschlagt und ist mit ihrem Ausgang E an zwei hintereinandergeschaltete Kippschaltungen 10 und 11 angeschlossen. Diese wiederum speisen ein Gatter 12 mit WEDER-Funktion und einen nachgeschalteten Inverter 13, insgesamt also ein ODER-Schaltelement, dessen Ausgang an den Gleichrichter 3 gelegt ist.

Taktimpulse zur Synchronisierung der Schaltung werden, wie bereits angedeutet, über den Anschluss A in die Schaltung eingegeben und haben einen zeitlichen Verlauf, welcher qualitativ in Figur 2a wiedergegeben ist.

Die hintereinandergeschalteten Kippschaltungen 10 und 11 in Zusammenwirkung mit dem Gatter 12 und dem Inverter 13 haben die Aufgabe, Gleichspannungsimpulse von vorwiegend einer Dauer entsprechend zwei Taktperioden von den Taktimpulsen abzuleiten und dem Anker des Gleichstrommotors zuzuführen, sobald dessen Drehzahlabfall eine solche Impulsbeaufschlagung notwendig macht. Die Ausgänge der Kippschaltungen 10 und 11 an den Schaltungspunkten F bzw. G sowie das Verknüpfungsergebnis durch das Gatter 12 am Schaltungspunkt H sind in den Diagrammen 2f, g und h dargestellt.

Eine Untersuchung von Figur 2b zeigt, dass der Vergleicher 6 immer dann eine Spannung abgibt, wenn die am Anker des Gleichstrommotors auftretende Spannung den in Figur 2b durch eine unterbrochene Linie angedeuteten Pegel der Referenzspannung übersteigt.

Dies ist jedenfalls während der Impulsbeaufschlagung des Motorankers über den Gleichrichter 3 von dem Inverter 13 aus der Fall. Wird die Impulsbeaufschlagung beendet, so sinkt die Spannung an dem Schaltungspunkt B kurzzeitig auf-

grund transienter Vorgänge stark ab, steigt jedoch dann aufgrund des Überganges des Gleichstrommotors 2 in den generatorischen Betrieb über den Referenzwert an, um dann allmählich aufgrund des Verbrauches der in den Schwungmassen gespeicherten Energie unter den Referenzwert abzusinken.

Hierbei kann es vorkommen, dass die an dem Schaltungspunkt B messbare Spannung kurzzeitig auf Null abfällt, wenn nämlich der Kontakt der Bürsten zu den Kollektorlamellen aufgrund von Erschütterungen oder durch Fremdkörper oder dergleichen verlorengeht. Diese kurzzeitigen Einbrüche der Spannung an dem Schaltungspunkt B verursachen am Ausgang des Vergleichers im Schaltungspunkt C entsprechende Unterbrechungen.

Damit aber vermieden wird, dass kurzzeitige Unterbrechungen der Verbindung zum Anker jeweils eine volle Impulsbeaufschlagung auslösen, ist die Kippschaltung 8 so ausgestaltet, dass sie die hintereinandergeschalteten Kippschaltungen 10 und 11 nur auslöst, wenn sich der Eingang zum Vergleicher 6 über die Leitung 5 während einer vollen Taktimpulszeit nicht geändert hat und kleiner als der Sollwert geblieben ist. Schon ein kurzdauernder Anstieg der Spannung auf der Leitung 5 über den Sollwert während der betreffenden Taktimpulsperiode löscht also den Befehl zur Auslösung der Impulsbeaufschlagung, wie aus Figur 1 in Verbindung mit den Figuren 2d und 2e zu entnehmen ist.

Es sei hier darauf hingewiesen, dass der Spannungsverlauf am Schaltungspunkt A dem Diagramm 2a entspricht, der Spannungsverlauf am Schaltungspunkt B gemäss Figur 1 dem Diagramm 2b entspricht usw.. In Figur 2b sind die Zeitdauern der Referenzspannungsunterschreitung, welche zur Auslösung eines neuen Gleichspannungsimpulses zur Beaufschlagung des Motorankers führen, mit J bezeichnet.

Es versteht sich, dass in einer Anordnung, in welcher eine Unterbrechung zwischen den Ankerwicklungen des Gleichstrommotors und dem Eingang des Vergleichers 6 nicht zu befürchten ist, die Kippschaltung 8 nicht erforderlich ist. Vielmehr kann in diesen Fällen der Ausgang des Vergleichers 6 unmittelbar an eine entsprechend dimensionierte monostabile Kippschaltung gelegt werden.

## Patentanspruch

1. Schaltung zur Drehzahlregelung eines fremderregten Gleichstrommotors (1) mit einer Vergleicherschaltung (6), der einerseits die Ankerspannung (5) und andererseits eine Referenzspannung (7) zuführbar ist und die an eine Auslöseschaltung (8, 10, 11) angeschlossen ist, die eine mit der Vergleicherschaltung (6) verbundene Kippschaltung (8) enthält und zur Auslösung der Weitergabe von Gleichspannungsimpulsen einer Impulsquelle an den Motoranker (2) jeweils abhängig von die Auslösebedingung erfüllenden Ausgangssignalen der Vergleicherschaltung (6) dient, dadurch gekennzeichnet, dass die Kippschaltung (8) ausserdem von Taktimpulsen (A) vorbestimmter Dauer beaufschlagt und derart ausgebildet ist, dass die Weitergabe der Gleichspannungsimpulse an den Motoranker (2) nur erfolgt, wenn die Dauer der die Auslösebedingung erfüllenden Ausgangssignale der Vergleicherschaltung (6) mindestens gleich der Dauer der Taktimpulse ist.

## Claim

1. Circuit for the speed control of a separately excited direct-current motor (1) with a comparator circuit (6), to which on the one hand the armature voltage (5) and on the other hand a reference voltage (7) can be supplied and which is connected to a release circuit (8, 10, 11) which includes a trigger circuit (8), connected to the comparator circuit (6), and serves for release of the transfer of direct voltage pulses of a pulse source to the motor armature (2) in each case independently of the output signals of the comparator circuit (6) meeting the release condition, characterized in that the trigger circuit (8) also has clock pulses (A) of a predetermined duration applied to it and is designed in such a way that the transfer of the direct voltage pulses to the motor armature (2) only takes place if the duration of the output signals of the comparator circuit (6) meeting the release condition is at least equal to the duration of the clock pulses.

## Revendication

1. Circuit pour le réglage du nombre de tours de moteurs à courant continu (1) à excitation séparée avec un circuit de comparateur (6) qui peut recevoir, d'un côté, la tension d'induit (5) et, d'autre part, une tension de référence (7) et qui est raccordé à un circuit de déclenchement (8, 10, 11) qui contient une base de temps (8) reliée au circuit de comparateur (6) et qui sert à déclencher la transmission d'impulsions de tension continue provenant d'une source d'impulsions vers l'induit du moteur (2) en fonction des signaux de sortie du circuit de comparateur (6) répondant aux conditions de déclenchement, caractérisé en ce que la base de temps (8) est soumise, en outre, à des impulsions de cadence (A) de durée prédéterminée et est disposée de façon à ce que la transmission des impulsions de tension continue à l'induit du moteur (2) n'ait lieu que si la durée des signaux de sortie du circuit de comparateur (6) répondant aux conditions de déclenchement est au moins égale à la durée des impulsions de cadence.

FIG. 1

# FIG. 2

| | |
|---|---|
| Takt | a |
| Kippschaltung 10 Ausg. | f |
| Kippschaltung 11 Ausg. | g |
| Ausg. v. 12 | h |
| Vergl. Ausg. | c |
| Sign. in Kippst. 8 | d |
| Ausg. Kippst. 8 | e |
| Ankerspannung | b |

Ref.

J    J

0 055 988